# FASCICULE DE BREVET EUROPEEN

(11) **EP 4 607 170 B1**
(45) Date de publication et mention de la délivrance du brevet: **19.08.2026**
(21) Numéro de dépôt: 25158203.7
(22) Date de dépôt: 17.02.2025
(51) Int. Cl.: G01M 3/32, B29C 49/80, B29C 49/36, B29C 49/42

(54) **PROCEDE DE DIAGNOSTIC DE FUITE DE FLUIDE DE FORMAGE DANS UN POSTE DE FORMAGE DE CORPS CREUX**
VERFAHREN ZUR DIAGNOSE VON FORMFLÜSSIGKEITSLECKS IN EINER HOHLKÖRPERFORMSTATION
METHOD FOR DIAGNOSING A FORMING FLUID LEAK IN A HOLLOW BODY FORMING STATION

(30) Priorité: 23.02.2024 FR 2401785
(43) Date de publication de la demande: 27.08.2025
(73) Titulaire: Sidel Participations, 76930 Octeville-sur-Mer (FR)
(72) Inventeur: DUCLOS, Yves-Alban, 76930 OCTEVILLE-SUR-MER (FR)
(74) Mandataire: Sidel Group

(56) Documents cités:
- EP-B1- 3 105 036
- EP-B1- 3 169 506
- JP-A- 2023 163 637
- US-B2- 8 713 993

## Description

### Domaine technique de l'invention

L'invention concerne un procédé de diagnostic de fuite de fluide de formage dans au moins un poste de formage de corps creux en matériau thermoplastique pendant une succession de cycle de production, chaque cycle comportant une première phase de mise sous pression du corps creux par raccordement à une source de fluide de formage comprimé à une pression maximale de soufflage via une vanne de soufflage, suivie d'une deuxième phase de maintien passif sous pression durant laquelle le corps creux est isolé de la source de fluide de formage par fermeture de la vanne de soufflage, une phase de dépressurisation du corps creux se déclenchant à l'issue de la phase de maintien passif sous pression.

### Arrière-plan technique

Il est connu de réaliser les récipients en matériau thermoplastique, tel que le polyéthylène téréphtalate (PET), par un cycle d'étirage-soufflage de préformes.

En général, une préforme présente une forme axisymétrique. La préforme comporte un col qui présente déjà sa forme définitive, tandis qu'un corps de la préforme est destiné à être déformé pendant le procédé de formage. L'axe principal de la préforme passe par le centre du col. Le fond de la préforme présente généralement une paroi de forme hémisphérique centrée sur l'axe principal de la préforme.

Pour permettre sa déformation, le corps de la préforme est chauffé au-delà d'une température de transition vitreuse permettant de rendre la paroi du corps malléable en réduisant sensiblement sa limite d'élasticité. Au contraire, le col est maintenu à une température inférieure à la température de transition vitreuse pour éviter sa déformation.

Le formage proprement des préformes en récipients finaux est effectué dans une unité de formage comportant au moins un poste de formage. En général une unité de formage comporte plusieurs postes de formage pour permettre la réalisation de récipients en grandes séries. L'unité de formage comporte par exemple un carrousel à la périphérie duquel plusieurs postes de formage sont répartis.

Chaque cycle de formage comporte une phase de mise sous pression progressive de la préforme lors de laquelle un fluide de formage comprimé est injecté à une pression maximale de soufflage dans le corps de la préforme de manière à permettre un étirage de la matière constituant de la paroi du corps de la préforme pour "gonfler" la préforme jusqu'à ce qu'elle atteigne sa forme définitive.

Afin de réaliser des récipients présentant une paroi d'épaisseur sensiblement constante, il est connu de réaliser un étirage dit "biaxial" de la matière constituant la paroi de la préforme pour la déformer plastiquement. La phase de mise sous pression comporte à cet effet une première sous-phase de présoufflage qui est réalisée préalablement à l'injection de fluide de formage à la pression maximale de soufflage. Durant cette sous-phase de présoufflage, une tige d'étirage coulissante est introduite coaxialement dans le col de la préforme en poussant le fond de la préforme de manière à étirer la paroi du corps dans une direction axiale. Pour éviter que la paroi de la préforme ne se contracte autour de la tige d'étirage pendant son étirage, du fluide de formage est injecté à une pression de présoufflage inférieure à la pression maximale de soufflage dans la préforme pour commencer l'expansion du corps vers l'extérieur, à distance de la tige d'étirage.

En général, lors de son cycle de formage, la préforme est agencée dans un moule du poste de formage. Le moule comporte une empreinte conforme au récipient final à obtenir. La paroi du corps de la préforme est plaquée contre la paroi de l'empreinte sous l'effet de la pression du fluide de formage pour conférer au récipient sa forme définitive.

Lorsqu'elle commence à se déformer, la préforme devient un « récipient intermédiaire » avant d'arriver à sa forme définitive de « récipient final ».

Dans la suite de la description et dans les revendications, on emploiera le terme "corps creux" pour désigner indifféremment une préforme, un récipient intermédiaire ou un récipient fini.

Lors de la production de récipients en grandes séries, les postes de formage mettent en œuvre de nombreux cycles de formage à une fréquence très élevée sur de longues durées. Par exemple, chaque poste de formage peut mettre en œuvre plusieurs milliers de cycles par heure pendant une journée.

Au cours des cycles de l'utilisation du poste de formage, certaines pièces d'usure, tels que des joints, subissent des détériorations progressives. Cependant, du fait des tolérance de fabrication et d'assemblage de chaque poste de formage, le rythme auquel les pièces d'usure se détériorent peut varier d'un poste à l'autre. Il est donc prévu des opérations de maintenance assez fréquentes pour pouvoir remplacer les pièces d'usure avant que cela ne nuise à la qualité des récipients produits. En outre, malgré la fréquence de ces opérations de maintenance, il se peut que certaines pièces d'usure se détériorent trop vite, ce qui aboutit à une consommation excessive de fluide de formage sous pression et/ou à l'obtention de récipients finaux non conformes.

En outre, certains éléments du poste de formage doivent être réglés en fonction du format de préformes traité par l'unité de formage, il s'agit par exemple de la position de la tuyère de soufflage par rapport au moule. Ces réglages sont susceptibles de bouger involontairement au cours des nombreux cycles de formage mis en œuvre par le poste de formage. Ces dérèglements intempestifs peuvent aussi aboutir à une consommation excessive de fluide de formage sous pression et/ou à l'obtention de récipients finaux non conformes.

Il existe donc un besoin pour diagnostiquer efficacement l'état des postes de formage pendant la production de récipients afin d'éviter d'avoir à arrêter trop fréquemment l'unité de formage pour réaliser des opérations de maintenance.

Dans l'état de l'art, on note le document JP 2023 163637 A qui divulgue un procédé de diagnostic de fuite de fluide de formage dans un poste de formage de corps creux en matériau thermoplastique pendant une succession de cycle de production, chaque cycle comportant une première phase de mise sous pression du corps creux par raccordement à une source de fluide de formage comprimé à une pression maximale de soufflage via une vanne de soufflage, suivi d'une phase de dépressurisation du corps creux, le procédé de diagnostic comportant une étape de détermination de l'évolution de la pression du fluide de formage dans le corps creux par réalisation d'une série de plusieurs mesures de pression.

### Résumé de l'invention

L'invention propose un procédé de diagnostic de fuite de fluide de formage dans au moins un poste de formage de corps creux en matériau thermoplastique pendant une succession de cycle de production, chaque cycle comportant une première phase de mise sous pression du corps creux par raccordement à une source de fluide de formage comprimé à une pression maximale de soufflage via une vanne de soufflage, suivie d'une deuxième phase de maintien passif sous pression durant laquelle le corps creux est isolé de la source de fluide de formage par fermeture de la vanne de soufflage, une phase de dépressurisation du corps creux se déclenchant à l'issue de la phase de maintien passif sous pression, caractérisé en ce que le procédé de diagnostic comporte une étape de détermination de l'évolution de la pression du fluide de formage dans le corps creux par réalisation d'une série de plusieurs mesures de pression successivement durant la phase de maintien passif sous pression.

Selon une autre caractéristique du procédé réalisé selon les enseignements de l'invention, l'étape de détermination de l'évolution de la pression de fluide de formage est suivie d'une étape de calcul d'un critère représentatif de la vitesse de chute de pression dans le corps creux pendant la phase de maintien passif à partir des mesures prises pendant la première étape de détermination de l'évolution de la pression de fluide de formage.

Selon une autre caractéristique du procédé réalisé selon les enseignements de l'invention, la deuxième étape de calcul d'un critère représentatif de la vitesse de chute de pression consiste à calculer la pente d'une droite définie par ajustement affine de mesures de la pression de fluide de formage en fonction du temps.

Selon une autre caractéristique du procédé réalisé selon les enseignements de l'invention, la pente de la droite est obtenue par une méthode de régression linéaire, telle que la méthode des moindres carrés.

Selon une autre caractéristique du procédé réalisé selon les enseignements de l'invention, la valeur de la pente associée audit poste de formage pendant le cycle en cours est enregistrée dans une mémoire d'une unité électronique de commande, le procédé comportant une troisième étape de calcul d'une moyenne des pentes enregistrées pendant une période déterminée.

Selon une autre caractéristique du procédé réalisé selon les enseignements de l'invention, lorsque le critère calculé sur un cycle est représentatif d'une chute de pression inférieure à un premier seuil déterminé, le corps creux formé lors de ce cycle est éjecté au rebut.

Selon une autre caractéristique du procédé réalisé selon les enseignements de l'invention, lorsque la moyenne calculée pendant la troisième étape de calcul d'une moyenne est inférieure à un deuxième seuil déterminé, un signal indiquant un besoin de maintenance du poste de formage associé est émis par l'unité électronique de commande.

Selon une autre caractéristique du procédé réalisé selon les enseignements de l'invention, les moyennes associées audit poste de formage sont enregistrées dans une mémoire de l'unité électronique de commande, le procédé comportant une quatrième étape supplémentaire de prédiction dans laquelle un critère représentatif de la pente des moyennes en fonction du temps est calculé à chaque cycle, l'unité électronique calculant alors, en fonction de la pente en fonction d'une pente des moyennes, un nombre de cycle restant avant que la moyenne ne devienne inférieure audit deuxième seuil.

Selon une autre caractéristique du procédé réalisé selon les enseignements de l'invention, est appliqué à chaque poste de formage d'une unité de formage comportant une pluralité de postes de formage, le critère représentatif de la chute de pression calculé lors de la deuxième étape de calcul d'un critère représentatif de la vitesse de chute de pression étant mémorisé à chaque cycle en correspondance avec un identifiant du poste de formage associé pour permettre un suivi individuel de chaque poste de formage.

Selon une autre caractéristique du procédé réalisé selon les enseignements de l'invention, la moyenne calculée lors de la troisième étape de calcul d'une moyenne est enregistrée dans une mémoire de l'unité électronique de commande en correspondance avec l'identifiant de poste de formage associé.

Selon une autre caractéristique du procédé réalisé selon les enseignements de l'invention, lors de la première étape, la première mesure de la série est effectuée après un délai déterminé, par exemple de 40 ms, à partir de l'émission d'un signal de fermeture de la vanne de soufflage marquant la fin de la phase de mise sous pression.

Selon une autre caractéristique du procédé réalisé selon les enseignements de l'invention, lors de la première étape de détermination de l'évolution de la pression de fluide de formage, les mesures de la série sont réalisées avec une fréquence de l'ordre du millième de seconde.

Selon une autre caractéristique du procédé réalisé selon les enseignements de l'invention, la durée de la phase de maintien passif est d'au moins 40 millisecondes.

Selon une autre caractéristique du procédé réalisé selon les enseignements de l'invention, la première étape de détermination de l'évolution de la pression de fluide de formage du procédé de diagnostic prend fin lorsqu'un signal d'ouverture d'une vanne permettant le début de dépressurisation du corps creux est émis par l'unité électronique de commande.

Selon une autre caractéristique du procédé réalisé selon les enseignements de l'invention, les mesures de pression de la première étape de détermination de l'évolution de la pression de fluide de formage sont effectuées par un capteur de pression qui émet à destination de l'unité électronique de commande un signal représentatif de la pression de fluide de formage dans le corps creux.

Selon une autre caractéristique du procédé réalisé selon les enseignements de l'invention, le capteur de pression est agencé dans une tuyère de soufflage du poste de formage qui est destinée à être raccordée de manière étanche au corps creux lors de son formage.

### Brève description des figures

D'autres caractéristiques et avantages de l'invention apparaitront au cours de la lecture de la description détaillée qui va suivre pour la compréhension de laquelle on se reportera aux dessins annexés.
[Fig.1] est une vue en coupe axiale qui représente schématiquement un poste de formage d'un corps creux apte à mettre en œuvre le procédé selon les enseignements de l'invention.
[Fig.2] est un schéma-bloc qui représente les différentes phases d'un cycle de formage d'un corps creux à l'état de récipient fini à partir d'un corps creux à l'état de préforme réalisé par le poste de formage de la [Fig.1], la pression étant représentée en ordonnées et le temps en abscisses.
[Fig.3] est un diagramme qui représente la pression de fluide de formage dans une préforme durant la réalisation du cycle de formage de la [Fig.2].
[Fig.4] est un schéma-bloc qui représente les différentes étapes d'un procédé de diagnostic de fuites réalisé selon les enseignements de l'invention et appliqué au poste de formage de la [Fig.1] durant plusieurs cycles de production.
[Fig.5] est une vue de détail à plus grande échelle du diagramme de la [Fig.2] qui représente la courbe lors d'une phase de maintien passif du corps creux sous pression.
[Fig.6] est une vue schématique de dessus qui représente une unité de formage qui est équipées de plusieurs postes de formage identiques à celui de la [Fig.1].
[Fig.7] est un diagramme qui représente les valeurs obtenues par la mise en œuvre du procédé de diagnostic à chacun des postes de formage de l'unité de formage de la [Fig.6], la chute de pression étant représentée en ordonnées et le numéro d'identification de chaque poste de formage étant représenté en abscisses.

### Description détaillée de l'invention

Dans la suite de la description, des éléments similaires ou identiques seront désignés par les mêmes références.

Sauf mention contraire dans la suite de la description, chaque vanne est commandée entre un état totalement ouvert dans laquelle le fluide de formage avec un débit maximal et un état totalement fermé dans laquelle le passage du fluide de formage est interdit. Chaque vanne est avantageusement commandée automatiquement par une unité 50 électronique de commande.

Dans la suite de la description, le fluide de formage est formé par un gaz, notamment par de l'air. Cependant, l'invention est aussi applicable à un fluide de formage formé par un liquide.

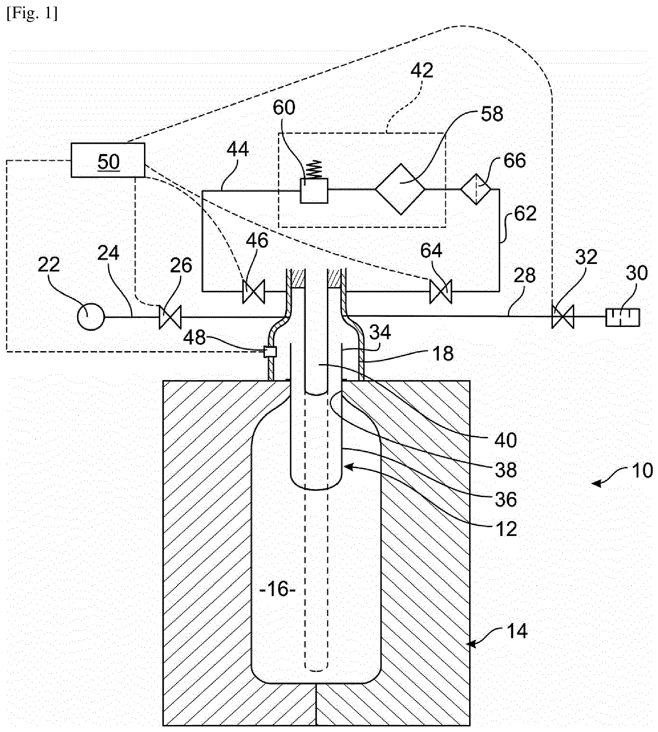

Comme illustré en [Fig.1], un poste 10 de formage pour moulage par étirage-soufflage d'un corps 12 creux, initialement à l'état de préforme thermoplastique, comprend un moule 14 formant une cavité 16 de moulage en deux parties pouvant s'écarter pour libérer le corps 12 creux à l'état de récipient final.

Le poste 10 de formage comprend en outre une tuyère 18 de soufflage qui est destinée à être raccordée de manière étanche avec l'intérieur du corps 12 creux reçu dans la cavité 16 de moulage. La tuyère 18 de soufflage présente par exemple la forme d'une cloche qui coiffe le col du corps 12 creux et qui est en appui contre une face supérieure du moule. Un joint d'étanchéité est avantageusement intercalé entre le moule 14 et la tuyère 18 de soufflage pour garantir une connexion étanche de la tuyère 18 de soufflage avec le corps 12 creux.

La tuyère 18 de soufflage est raccordée à une source 22 de fluide de formage à une pression Pfmax maximale de soufflage, par exemple environ 40 bars. La source 22 de fluide de formage soufflage à la pression Pfmax maximale de soufflage est raccordée à la tuyère 18 de soufflage par l'intermédiaire d'une conduite 24 de soufflage dans laquelle une vanne 26 de soufflage est interposée.

La tuyère 18 de soufflage est aussi raccordée à la pression Patm atmosphérique par l'intermédiaire d'une conduite 28 d'échappement. La conduite 28 d'échappement est ici équipée d'un silencieux 30. Une vanne 32 d'échappement est interposée dans la conduite 28 d'échappement.

Le corps 12 creux à l'état de préforme comprend un col 34 et un corps 36 qui est préchauffé avant d'être introduit dans la cavité 16 de moulage. Le col 34 fait ici saillie à l'extérieur de la cavité 16 de moulage par un orifice 38 du moule 14. Lors de l'étirage-soufflage, la cavité 16 de moulage est fermée autour du corps 36, la tuyère 18 de soufflage s'accouplant sur le col 34.

Dans l'exemple représenté à la [Fig.1], la tuyère 18 de soufflage est ici équipée d'une tige 40 d'étirage mobile verticalement entre une position rétractée, représentée en traits pleins à la [Fig.1], et une position étendue représentée en traits interrompus à la [Fig.1]

A titre d'exemple non limitatif, la tuyère 18 de soufflage est aussi raccordée à une source 42 de fluide de formage à une pression Pfp de présoufflage.

La source 42 de fluide de formage à la pression Pfp de présoufflage est raccordée à la tuyère 18 de soufflage par l'intermédiaire d'une conduite 44 de présoufflage dans laquelle une vanne 46 de présoufflage est interposée.

La pression Pfmax maximale de soufflage est par exemple de l'ordre de 40 bars. La pression Pfp de présoufflage est inférieure à la pression Pfmax maximale de soufflage. Elle est par exemple comprise entre 6 bars et 20 bars.

Le poste 10 de formage est destiné à former un récipient fini à partir d'un corps 12 creux à l'état de préforme en matériau thermoplastique pendant un cycle de production de récipient.

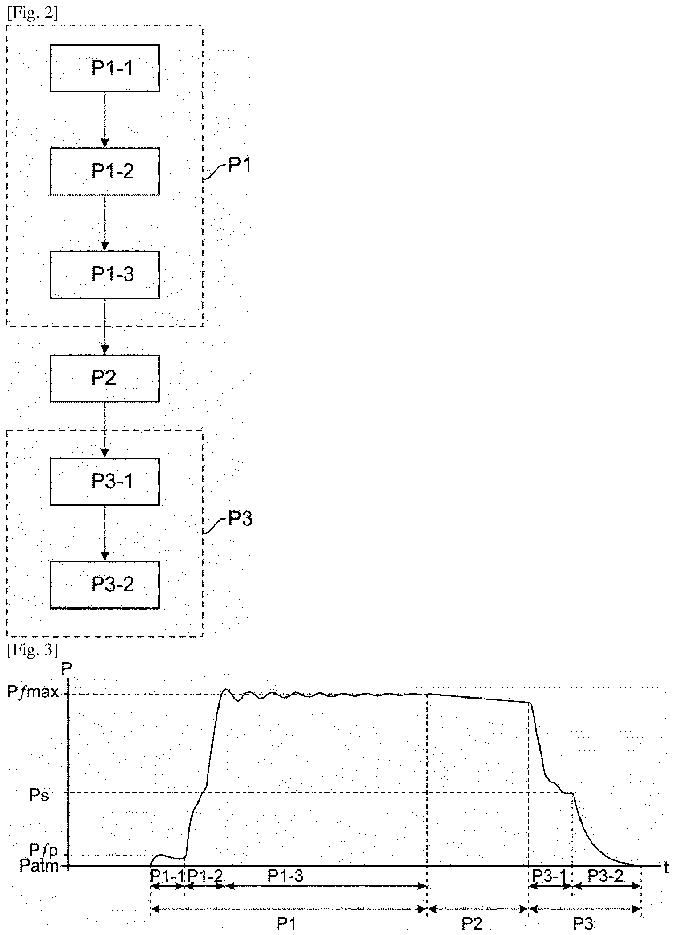

Comme représenté aux figures 2 et 3, chaque cycle de production de récipient comporte une première phase "P1" de mise sous pression du corps 12 creux pendant laquelle le corps 36 du corps 12 creux est déformé par augmentation progressive de la pression à l'intérieur du corps 12 creux. Pour ce faire, pendant au moins une dernière sous-phase "P1-3" de cette phase "P1" de mise sous pression, l'intérieur du corps 12 creux est raccordé à la source 22 de fluide de formage comprimé à la pression Pfmax maximale de soufflage par ouverture de la vanne 26 de soufflage. A la fin de cette phase "P1" de mise sous pression, le corps 12 creux est rempli de fluide de formage à la pression Pfmax maximale de soufflage.

Dans l'exemple représenté aux figures, la première phase "P1" de mise sous pression comporte tout d'abord une première sous-phase "P1-1" de présoufflage durant laquelle le corps 12 creux est étiré par la tige 40 d'étirement. Simultanément à cet étirement, la tuyère 18 de soufflage est raccordée à la source 42 de fluide de formage à la pression Pfp de présoufflage par ouverture de la vanne 46 de présoufflage. Cela permet d'augmenter la pression dans le corps 12 creux jusqu'à la pression Pfp de présoufflage.

Puis, la vanne 46 de présoufflage est fermée et la vanne 26 de soufflage est ouverte pour provoquer une nouvelle montée en pression du fluide de formage à l'intérieur du corps 12 creux jusqu'à la pression Pfmax maximale de soufflage pendant une deuxième sous-phase "P1-2" de soufflage.

A l'issue de cette deuxième sous-phase "P1-2" de soufflage, la dernière sous-phase "P1-3", dite sous-phase "P1-3" de maintien actif sous pression, est déclenchée. Durant cette dernière sous-phase "P1-3", la vanne 26 de soufflage demeure ouverte pour maintenir le fluide de formage dans le corps 12 creux à la pression Pfmax maximale de soufflage pendant une durée suffisante pour permettre au corps 12 creux de conserver la forme de l'empreinte de la cavité 16 de moulage à l'issue de cette phase "P1" de mise sous pression.

On a constaté que, pendant cette sous-phase "P1-3" de maintien actif sous pression, comme représenté à la [Fig.3], la pression du fluide de formage à l'intérieur du corps 12 creux oscille autour de sa valeur de pression Pfmax maximale de soufflage par des effets de résonnance.

Le première phase "P1" de mise sous pression est suivie d'une deuxième phase "P2" de maintien passif sous pression durant laquelle le corps 12 creux, alors dans son état de récipient fini, est isolé de la source 22 de fluide de formage à la pression Pfmax maximale de soufflage par fermeture de la vanne 26 de soufflage. Durant cette deuxième phase "P2" de maintien passif sous pression, toutes les vannes communiquant avec la tuyère 18 de soufflage sont fermées de manière à enclore totalement le fluide de formage sous pression dans le corps 12 creux et dans la tuyère 18 de soufflage.

Une troisième phase "P3" de dépressurisation du corps 12 ceux est déclenchée à l'issue de la deuxième phase "P2" de maintien passif sous pression afin de ramener l'intérieur du corps 12 creux à la pression Patm atmosphérique pour permettre son extraction du moule 14. Durant cette troisième phase "P3" de dépressurisation, le fluide de formage sous pression est évacué, notamment vers l'atmosphère par ouverture de la vanne 32 d'échappement.

Il est quasiment impossible de maintenir le fluide de formage sous pression de manière parfaitement étanche dans la tuyère 18 de soufflage et dans le corps 12 creux pendant la deuxième phase "P2" de maintien passif sous pression. Le fluide de formage peut par exemple fuir au niveau de la face de joint entre les deux parties de moule 14 ou par les moyens d'étanchéité du raccordement entre la tuyère 18 de soufflage et le corps 12 creux, ou encore par une vanne dysfonctionnelle ou par une conduite percée. Ainsi, on observe pendant cette phase une baisse plus ou moins rapide de la pression de fluide de formage due aux fuites de fluide de formage du poste 10 de formage.

Il est nécessaire de repérer rapidement des fuites de fluide de formage trop importantes au niveau de la tuyère 18 de soufflage et du corps 12 creux pour éviter une surconsommation de fluide de formage sous pression.

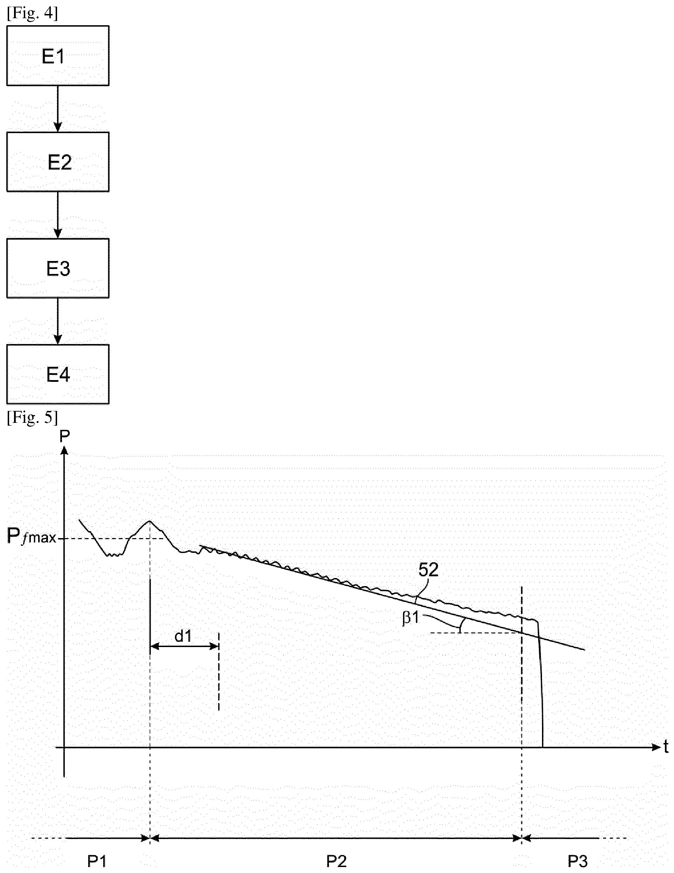

Pour résoudre ce problème, l'invention propose un procédé de diagnostic de fuite de fluide de formage dans un poste 10 de formage. Un exemple de mise en œuvre du procédé est représenté aux figures 4 et 5.

Ce procédé est avantageusement mis en œuvre pendant que le poste 10 de formage est en cours de production de récipients. Cela permet ainsi de ne pas avoir à interrompre la production de récipients pour réaliser ce procédé de diagnostic.

Le procédé comporte une étape "E1" de détermination de l'évolution de la pression du fluide de formage dans le corps 12 creux par réalisation d'une série de plusieurs mesures de pression successivement durant la phase "P2" de maintien passif sous pression.

La série comporte au moins 2 mesures, de préférence plus de 3 mesures. Avantageusement, la série comporte une centaine de mesures.

Les mesures de pression sont ici effectuées par un capteur 48 de pression qui émet un signal représentatif de la pression de fluide de formage à destination d'une unité 50 électronique de commande.

Le capteur 48 de pression est agencé à un endroit qui permet de mesurer une pression représentative de la pression à l'intérieur du corps 12 creux à tout moment pendant le cycle de formage, et notamment lors de la deuxième phase "P2" de maintien passif. Le capteur 48 de pression est ici agencé dans la tuyère 18 de soufflage du poste 10 de formage.

Le diagnostic de fuite est donc appliqué au corps 12 creux, à la tuyère 18 de soufflage et à tous les volumes qui communiquent avec la tuyère 18 pendant la deuxième phase « P2 » de maintien passif.

Lors de la première étape "E1" de détermination de l'évolution de la pression du fluide de formage, la première mesure de la série est effectuée après un délai "d1" déterminé, par exemple de 40 ms, à partir de l'émission d'un signal de fermeture de la vanne 26 de soufflage par l'unité 50 électronique de commande à la fin de la phase "P1" de mise sous pression.

Ce délai "d1" est suffisant pour permettre à la vanne 26 de soufflage de se fermer totalement en prenant en compte son temps de réponse.

En outre ce délai "d1" est de préférence suffisant pour que les oscillations de pression dues aux effets de résonnances soient atténuées voire totalement disparues.

La durée de la phase "P2" de maintien passif est d'au moins 40 millisecondes. De préférence, la durée de la phase "P2" de maintien passif est plus longue, par exemple de l'ordre de la seconde, notamment d'environ 2 secondes. Cette durée permet de récolter des mesures réparties sur une durée suffisante pour obtenir une indication pertinente de l'évolution de la pression de fluide de formage dans le corps 12 creux.

Lors de cette première étape "E1" de détermination de l'évolution de la pression du fluide de formage, les mesures de la série sont réalisées avec une fréquence aussi élevée que permise par le capteur 48 de pression pour obtenir une mesure précise. Par exemple, la fréquence est de l'ordre du millième de seconde. Cela permet d'obtenir un nombre élevé de mesures permettant de suivre de manière très précise l'évolution de la pression de fluide de formage dans le corps 12 creux. Par exemple, les mesures sont réalisées toutes les 0.4 millisecondes.

Le première étape « E1 » du procédé de détermination de l'évolution de la pression de fluide de formage prend fin à l'issue de la phase "P2" de maintien passif, lorsqu'un signal d'ouverture d'une vanne permettant le début de dépressurisation du corps 12 creux est émis par l'unité 50 électronique de commande pour déclencher la troisième phase "P3" de dépressurisation.

L'étape "E1" de détermination de l'évolution de la pression de fluide de formage est suivie d'une étape "E2" de calcul d'un critère représentatif de la vitesse de chute de pression dans le corps 12 creux pendant la phase "P2" de maintien passif à partir des mesures prises pendant la première étape "E1" de détermination de l'évolution de la pression du fluide de formage.

La deuxième étape "E2" de calcul d'un critère représentatif de la vitesse de chute de pression consiste ici à calculer une pente "β₁" d'une droite 52 définie par ajustement affine de la série de mesures prises pendant la première étape "E1" de détermination de l'évolution de la pression du fluide de formage en fonction du temps. Cette deuxième étape "E2" de calcul d'un critère représentatif de la vitesse de chute de pression est réalisée automatiquement par l'unité 50 électronique de commande.

L'ajustement affine peut-être obtenu par régression linéaire, en particulier par la méthode des moindres carrés, ou par d'autres méthodes reposant par exemple sur une segmentation des valeurs pour utiliser les phénomènes de lissage (par exemple la méthode de Mayer ou la méthode médiane-médiane).

Dans un exemple de réalisation, la pente "β₁" de la droite 52 est obtenue par une méthode de régression linéaire, notamment par la méthode des moindres carrés.

Selon cette méthode, chaque mesure "nᵢ" présente des coordonnées :
- "yᵢ" correspondant à la pression mesurée ;
- "xᵢ" correspondant au temps auquel la mesure a été effectuée.

Le nombre "n" représente le nombre de mesures effectuées pendant la série.

La pente "β₁" de la droite 52 obtenue par régression linéaire à partir de toutes les mesures de la série sera donnée par la formule suivante : [Math 1]
${β}_{1} = \frac{\sum {x}_{i} \sum {y}_{i} - n \sum {x}_{i} {y}_{i}}{{\left(\sum {x}_{i}\right)}^{2} - n \sum {x}_{i}^{2}}$

La pression ne pouvant pas augmenter durant cette phase « P2 » de maintien passif de la pression, la pente "β₁" est forcément négative ou nulle. La vitesse à laquelle la pression baisse est proportionnelle à la pente "β₁" ainsi calculée. Cela signifie que si la pente "β₁" passe au-dessous d'un premier seuil "S1" déterminé, cela signifie que le corps 12 creux est probablement percé, ce qui provoque une fuite très rapide du fluide de formage et donc une chute rapide de pression. Lorsque l'unité 50 électronique de commande détecte que la pente "β₁" ainsi calculée est inférieure audit premier seuil "S1" déterminé, elle commande automatiquement l'éjection vers le rebut du corps 12 creux formé lors de ce cycle car il est considéré comme étant percé.

Le poste 10 de formage est destiné à être utilisé pour produire des récipients en grandes séries. De ce fait, le poste 10 de formage réalise successivement de nombreux cycles de production. Il est donc intéressant de pouvoir mettre en œuvre le procédé de diagnostic à chaque cycle afin de pouvoir obtenir un diagnostic robuste de fuite de fluide de formage dans ledit poste 10 de formage. Cela permet notamment d'écarter les cas particuliers dans lesquels la chute de pression est due à un corps 12 creux percé.

A cet effet, la pente "β₁" associée audit poste 10 de formage pendant le cycle en cours est enregistrée dans une mémoire de l'unité 50 électronique de commande. Le procédé de diagnostic comporte une troisième étape "E3" de calcul d'une moyenne "β_{av 1}" enregistrées pendant une période déterminée.

Les périodes déterminées sont successives et ne se chevauchent pas. Ainsi, à l'issue d'une période de temps, l'unité 50 électronique de commande calcule moyenne "βₐᵥ" des pentes "β₁" enregistrées pendant ladite période de temps. Puis, une nouvelle période commence.

La période déterminée est ici une période de temps, par exemple 24h.

En variante, la période déterminée est un nombre de cycles de production de récipients.

Lorsque la moyenne "βₐᵥ" calculée pendant la troisième étape "E3" de calcul d'une moyenne "βₐᵥ" est inférieure à un deuxième seuil "S2" déterminé, qui est par exemple supérieur au premier seuil "S1" déterminé, un signal indiquant un besoin de maintenance du poste de formage associé est émis par l'unité 50 électronique de commande. Cela signifie alors que le poste 10 de formage fait l'objet de fuite de fluide de formage indépendamment de l'état du corps 12 creux et qu'il est donc nécessaire d'intervenir pour changer des pièces d'usure ou effectuer des réglages.

Optionnellement, le procédé de diagnostic peut aussi comporter une quatrième étape "E4" supplémentaire de prédiction qui vise à estimer le nombre de cycle qu'il reste pour réaliser des opérations de maintenance avant que la moyenne "βₐᵥ" ne soit inférieure au deuxième seuil "S2" déterminé. Lors de cette quatrième étape "E4" supplémentaire de prédiction, les moyennes "βₐᵥ" associées audit poste 10 de formage sont enregistrées dans une mémoire de l'unité 50 électronique de commande, et un critère représentatif de la pente "β₂" de la moyenne "βₐᵥ" en fonction du temps est calculé à chaque cycle. L'unité 50 électronique calcule alors un nombre de cycle restant en fonction de la pente "B₂" de la moyenne "βₐᵥ" avant que la moyenne "βₐᵥ" ne devienne inférieure audit deuxième seuil "S2".

Pour cette quatrième étape « E4 » supplémentaire de prédiction, le critère représentatif de la pente "β₂" de la moyenne "βₐᵥ" est calculé sur une collection de moyennes "βₐᵥ" calculées sur plusieurs périodes déterminées successives. Par exemple, lorsqu'une période déterminée est fixée à 24h, la pente "β₂" de la moyenne "βₐᵥ" est calculé sur une collection de moyennes "βₐᵥ" calculées sur plusieurs jours.

La quatrième étape "E4" supplémentaire de prédiction consiste ici à calculer la pente "β₂" d'une droite définie par ajustement affine des moyennes "βₐᵥ" en fonction du temps. Cette quatrième étape "E4" supplémentaire de prédiction est réalisée automatiquement par l'unité 50 électronique de commande.

Comme lors de l'étape "E2" de calcul d'un critère représentatif de la vitesse de chute de pression, l'ajustement affine peut être obtenu par régression linéaire, en particulier par la méthode des moindres carrés, ou par d'autres méthodes reposant par exemple sur une segmentation des valeurs pour utiliser les phénomènes de lissage (par exemple la méthode de Mayer ou la méthode médiane-médiane).

Dans un exemple de réalisation, la pente "β₂" de la droite est obtenue par une méthode de régression linéaire, telle que la méthode des moindres carrés.

Selon cette méthode, chaque moyenne "βₐᵥ" présente des coordonnées :
- "pᵢ" correspondant à la moyenne calculée ;
- "qᵢ" correspondant à la période déterminée à laquelle la moyenne "βₐᵥ" a été calculée.

Le nombre "m" représente le nombre de périodes déterminées prises en compte pour calculer la pente "β₂".

La pente "β₂" de la droite obtenue par régression linéaire à partir de toutes les mesures de la série sera donnée par la formule suivante :[Math 2] ${β}_{2} = \frac{\sum {p}_{i} \sum {q}_{i} - m \sum {p}_{i} {q}_{i}}{{\left(\sum {p}_{i}\right)}^{2} - m \sum {p}_{i}^{2}}$

Le procédé de l'invention permet ainsi de détecter très efficacement un corps 12 creux percé, de détecter le moment auquel il est nécessaire d'effectuer une opération de maintenance sur un poste de formage particulier et même d'anticiper ce moment.

Par exemple, il est possible de calculer la durée restant avant la maintenance d'un poste 10 de formage selon l'équation suivante : [Math 3] ${Temps}_{avantmaintenance} = \frac{{S}_{2} - {β}_{1}}{{β}_{2}}$
dans laquelle :
- "β₁" est la pente calculée lors de l'étape « E1 » de détermination de l'évolution de la pression de fluide de formage pour le cycle en cours, comme cela a été défini précédemment ;
- "β₂" est la pente de la droite calculée lors de la quatrième étape "E4" supplémentaire de prédiction pour la dernière période déterminée complétée ;
- "S2" est le deuxième seuil déterminé.

Cette opération est automatiquement mise en œuvre par l'unité 50 électronique de commande, par exemple à itération du procédé ou à chaque début de nouvelle période déterminée.

Lors de la mise en œuvre du procédé, la première étape "E1" de détermination de l'évolution de la pression du fluide de formage et la deuxième étape "E2" de calcul d'un critère représentatif de la vitesse de chute de pression sont réalisées à chaque cycle de production réalisé par le poste 10 de formage associé. La troisième étape "E3" de calcul d'une moyenne "βₐᵥ" est réalisée seulement à l'issue de chaque période déterminée, par exemple une fois par jour. La quatrième étape "E4" supplémentaire de prédiction est réalisée à l'issue de plusieurs périodes déterminées successives, par exemple une fois par semaine.

Ce procédé est très précis car il est basé sur une série de mesures effectuées à chaque cycle, ce qui permet de calculer un critère très fiable et robuste qui permet de lisser les erreurs de mesure dues par exemple à des fluctuations passagères de la pression de fluide de formage dans le corps 12 creux ou à un bruit de mesure du capteur de pression.

Généralement, le poste 10 de formage est agencé dans une unité 54 de formage comportant plusieurs postes 10 de formage identiques. L'unité 54 de formage comporte par exemple un carrousel 56 à la périphérie duquel plusieurs postes 10 de formage sont répartis régulièrement. L'unité 54 de formage comporte par exemple vingt postes 10 de formage. Une telle unité 54 de formage est particulièrement utilisée dans une installation de production de récipients en très grandes séries, par exemple à une cadence de 60000 récipients par heure.

Tous les postes 10 de formage sont identiques au poste 10 de formage qui a été décrit précédemment. De manière non limitative, chaque source 22, 42 de fluide de formage sous pression est commune à tous les postes 10 de formage de l'unité de formage, en revanche chaque poste 10 de formage comporte des vannes associées pour pouvoir être commandé individuellement.

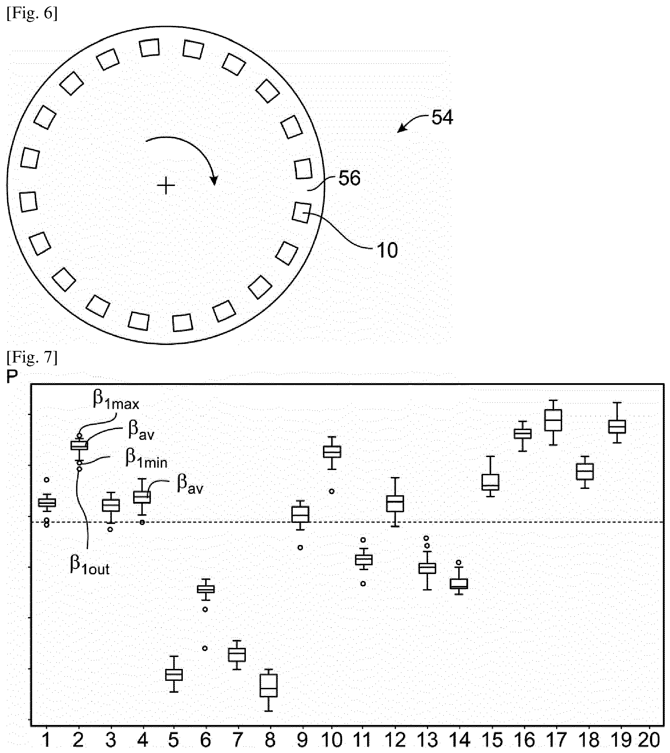

Comme représenté à la [Fig.6], le procédé de diagnostic est avantageusement mis en œuvre individuellement pour chacun des postes de formage. Pour permettre à l'unité 50 électronique de commande d'associer les valeurs calculées pendant un procédé de diagnostic au poste 10 de formage correspondant, chaque poste 10 de formage est avantageusement identifié par un identifiant unique.

Ainsi, le critère représentatif de la chute de pression calculé lors de la deuxième étape "E2" de calcul d'un critère représentatif de la vitesse de chute de pression est mémorisé à chaque cycle en correspondance avec l'identifiant de poste 10 de formage associé pour permettre un suivi individuel de chaque poste 10 de formage.

De même, la moyenne "βₐᵥ" calculée lors de la troisième étape "E3" de calcul d'une moyenne "βₐᵥ" est enregistrée dans une mémoire de l'unité 50 électronique de commande en correspondance avec l'identifiant du poste 10 de formage associé.

Comme représenté à la [Fig.7], chaque poste 10 de formage est identifié par un numéro. Pour chaque poste 10 de formage, on dispose de la moyenne "βₐᵥ", des valeurs extrêmes "β₁ₘₐₓ" et "β₁ₘᵢₙ" de la collection et éventuellement des valeurs "β₁ₒᵤₜ" de pentes qui sont considérées comme trop éloignées de la moyenne "βₐᵥ" et ne sont donc pas retenues pour le calcul de celle-ci.

Il est ainsi possible de connaître à tout moment les caractéristiques d'étanchéité individuelles de chaque poste 10 de formage. Cela permet d'intervenir au meilleur moment pour minimiser le nombre d'opérations de maintenance.

Cela permet ainsi d'économiser du fluide de formage sous pression et, en conséquence, de l'énergie.

Cet avantage est d'autant plus important lorsqu'il est combiné avec les avantages obtenus en recyclant une partie du fluide de formage sous pression.

Dans l'exemple représenté à la [Fig.1], la source de fluide de formage à la pression Pfp de présoufflage comporte un réservoir 58 de stockage de fluide de formage sous pression qui est raccordé à la tuyère 18 de soufflage par l'intermédiaire de la vanne 46 de présoufflage associée. Ledit réservoir 58 de stockage comporte du fluide de formage stocké à une pression Ps supérieure ou égale à la pression Pfp de présoufflage. Pour permettre de délivrer le fluide de formage à la pression Pfp de présoufflage, la source de présoufflage comporte en outre un régulateur 60 de pression qui permet de réduire la pression du fluide de formage depuis sa pression Ps de stockage jusqu'à sa pression Pfp de présoufflage.

La tuyère 18 de soufflage est aussi raccordée audit réservoir 58 de stockage par l'intermédiaire d'une conduite 62 de récupération dans laquelle une vanne 64 de récupération est interposée. Cela permet de réutiliser une partie du fluide de formage sous pression contenue dans le corps 12 creux à la fin de son formage pour participer au formage d'un corps 12 creux suivant en récipient final. Cela permet notamment de réduire les dépenses énergétiques globales pour produire un récipient final.

Un filtre 66 est avantageusement interposé dans la conduite 62 de récupération pour éviter que des particules polluantes ne soit réintroduites dans un corps 12 creux lors d'un prochain soufflage.

Ainsi, la troisième phase "P3" de dépressurisation précédemment décrite comporte ici une première sous-phase "P3-1" d'évacuation du fluide de formage sous pression depuis le corps 12 creux jusqu'au réservoir 58 de stockage par ouverture de la vanne 64 de récupération.

Lorsque la pression dans le corps 12 creux a chuté jusqu'à une pression légèrement supérieure à la pression Ps de stockage, une deuxième sous-phase "P3-2" est déclenchée. La vanne 64 de récupération est alors fermée et la vanne 32 d'échappement est ouverte pour permettre au reste du fluide de formage de s'échapper vers l'atmosphère jusqu'à ce que la pression à l'intérieur du corps 12 creux soit sensiblement égale à la pression Patm atmosphérique.

## Revendications

1. Procédé de diagnostic de fuite de fluide de formage dans au moins un poste (10) de formage de corps (12) creux en matériau thermoplastique pendant une succession de cycle de production, chaque cycle comportant une première phase (P1) de mise sous pression du corps (12) creux par raccordement à une source (22) de fluide de formage comprimé à une pression (Pfmax) maximale de soufflage via une vanne (26) de soufflage, suivie d'une deuxième phase (P2) de maintien passif sous pression durant laquelle le corps (12) creux est isolé de la source (22) de fluide de formage par fermeture de la vanne (26) de soufflage, une phase (P3) de dépressurisation du corps (12) creux se déclenchant à l'issue de la phase (P2) de maintien passif sous pression, **caractérisé en ce que** le procédé de diagnostic comporte une étape (E1) de détermination de l'évolution de la pression du fluide de formage dans le corps (12) creux par réalisation d'une série de plusieurs mesures de pression successivement durant la phase (P2) de maintien passif sous pression.

2. Procédé selon la revendication précédente, **caractérisé en ce que** l'étape (E1) de détermination de l'évolution de la pression de fluide de formage est suivie d'une étape (E2) de calcul d'un critère représentatif de la vitesse de chute de pression dans le corps (12) creux pendant la phase (P2) de maintien passif à partir des mesures prises pendant la première étape (E1) de détermination de l'évolution de la pression de fluide de formage.

3. Procédé selon la revendication précédente, **caractérisé en ce que** la deuxième étape (E2) de calcul d'un critère représentatif de la vitesse de chute de pression consiste à calculer la pente (β₁) d'une droite (52) définie par ajustement affine de mesures de la pression de fluide de formage en fonction du temps.

4. Procédé selon la revendication précédente, **caractérisé en ce que** la pente (β₁) de la droite (52) est obtenue par une méthode de régression linéaire, telle que la méthode des moindres carrés.

5. Procédé selon l'une quelconque des revendications 2 à 4, **caractérisé en ce que** la valeur de la pente (β₁) associée audit poste de formage pendant le cycle en cours est enregistrée dans une mémoire d'une unité (50) électronique de commande, le procédé comportant une troisième étape (E3) de calcul d'une moyenne (βₐᵥ) des pentes (β₁) enregistrées pendant une période déterminée.

6. Procédé selon l'une quelconque des revendications 2 à 5, **caractérisé en ce que**, lorsque le critère calculé sur un cycle est représentatif d'une chute de pression inférieure à un premier seuil (S1) déterminé, le corps (12) creux formé lors de ce cycle est éjecté au rebut.

7. Procédé selon la revendication 5, **caractérisé en ce que**, lorsque la moyenne (βₐᵥ) calculée pendant la troisième étape (E3) de calcul d'une moyenne (βₐᵥ) est inférieure à un deuxième seuil (S2) déterminé, un signal indiquant un besoin de maintenance du poste (10) de formage associé est émis par l'unité (50) électronique de commande.

8. Procédé selon la revendication précédente, **caractérisé en ce que** les moyennes (βₐᵥ) associées audit poste (10) de formage sont enregistrées dans une mémoire de l'unité (50) électronique de commande, le procédé comportant une quatrième étape (E4) supplémentaire de prédiction dans laquelle un critère représentatif de la pente (β₂) des moyennes (βₐᵥ) en fonction du temps est calculé à chaque cycle, l'unité (50) électronique calculant alors, la pente en fonction d'une pente (β₂) des moyennes (βₐᵥ), et un nombre de cycle restant avant que la moyenne (βₐᵥ) ne devienne inférieure audit deuxième seuil (S2).

9. Procédé selon l'une quelconque des revendications 2 à 8, **caractérisé en ce qu'**il est appliqué à chaque poste (10) de formage d'une unité (54) de formage comportant une pluralité de postes (10) de formage, le critère représentatif de la chute de pression calculé lors de la deuxième étape (E2) de calcul d'un critère représentatif de la vitesse de chute de pression étant mémorisé à chaque cycle en correspondance avec un identifiant du poste (10) de formage associé pour permettre un suivi individuel de chaque poste (10) de formage.

10. Procédé selon la revendication précédente, prise en combinaison avec la revendication 5, **caractérisé en ce que** la moyenne (βₐᵥ) calculée lors de la troisième étape (E3) de calcul d'une moyenne (βₐᵥ) est enregistrée dans une mémoire de l'unité (50) électronique de commande en correspondance avec l'identifiant de poste (10) de formage associé.

11. Procédé selon l'une quelconque des revendications précédentes, **caractérisé en ce que**, lors de la première étape (E1), la première mesure de la série est effectuée après un délai (d1) déterminé, par exemple de 40 ms, à partir de l'émission d'un signal de fermeture de la vanne (26) de soufflage marquant la fin de la phase (P1) de mise sous pression.

12. Procédé selon l'une quelconque des revendications précédentes, **caractérisé en ce que**, lors de la première étape (E1) de détermination de l'évolution de la pression de fluide de formage, les mesures de la série sont réalisées avec une fréquence de l'ordre du millième de seconde.

13. Procédé selon l'une quelconque des revendications précédentes, **caractérisé en ce que** la durée de la phase (P2) de maintien passif est d'au moins 40 millisecondes.

14. Procédé selon l'une quelconque des revendications précédentes, **caractérisé en ce que** la première étape (E1) de détermination de l'évolution de la pression de fluide de formage du procédé de diagnostic prend fin lorsqu'un signal d'ouverture d'une vanne (32, 64) permettant le début de dépressurisation du corps (12) creux est émis par l'unité (50) électronique de commande.

15. Procédé selon l'une quelconque des revendications précédentes, **caractérisé en ce que** les mesures de pression de la première étape (E1) de détermination de l'évolution de la pression de fluide de formage sont effectuées par un capteur (48) de pression qui émet à destination de l'unité (50) électronique de commande un signal représentatif de la pression de fluide de formage dans le corps (12) creux.

16. Procédé selon la revendication précédente, **caractérisé en ce que** le capteur (48) de pression est agencé dans une tuyère (18) de soufflage du poste (10) de formage qui est destinée à être raccordée de manière étanche au corps (12) creux lors de son formage.

## Patentansprüche

1. Verfahren zur Diagnose einer Formungsfluidleckage in mindestens einer Formungsstation (10) für Hohlkörper (12) aus thermoplastischem Material während einer Produktionszyklusabfolge, jeder Zyklus umfassend eine erste Phase (P1) des Unterdrucksetzens des Hohlkörper (12) durch Anschließen an eine Quelle (22) für auf einen maximalen Blasdruck (Pfmax) verdichtetes Formungsfluid über ein Blasventil (26), gefolgt von einer zweiten Phase (P2) des passiven Haltens unter Druck, während der der Hohlkörper (12) durch Schließen des Blasventils (26) von der Quelle (22) für Formungsfluid isoliert ist, eine Phase (P3) der Druckentlastung des Hohlkörpers (12), die am Ende der Phase (P2) des passiven Haltens unter Druck ausgelöst wird, **dadurch gekennzeichnet, dass** das Verfahren zur Diagnose einen Schritt (E1) des Bestimmens des Verlaufs des Drucks des Formungsfluids in dem Hohlkörper (12) durch Ausführen einer Reihe aus mehreren Druckmessungen nacheinander während der Phase (P2) des passiven Haltens unter Druck umfasst.

2. Verfahren nach dem vorhergehenden Anspruch, **dadurch gekennzeichnet, dass** auf den Schritt (E1) des Bestimmens des Verlaufs des Formungsfluiddrucks ein Schritt (E2) des Berechnens eines für die Druckabfallgeschwindigkeit in dem Hohlkörper (12) während der Phase (P2) des passiven Haltens repräsentativen Kriteriums ausgehend von den während des ersten Schritts (E1) des Bestimmens des Verlaufs des Formungsfluiddrucks erfassten Messungen folgt.

3. Verfahren nach dem vorhergehenden Anspruch, **dadurch gekennzeichnet, dass** der zweite Schritt (E2) des Berechnens eines für die Druckabfallgeschwindigkeit repräsentativen Kriteriums darin besteht, die Steigung (β₁) einer Ausgleichsgeraden (52) von Messungen des Formungsfluiddrucks in Abhängigkeit von der Zeit zu berechnen.

4. Verfahren nach dem vorhergehenden Anspruch, **dadurch gekennzeichnet, dass** die Steigung (β₁) der Geraden (52) durch eine Methode der linearen Regression wie die Methode der kleinsten Quadrate erhalten wird.

5. Verfahren nach einem der Ansprüche 2 bis 4, **dadurch gekennzeichnet, dass** der Wert der Steigung (β₁), die der Formungsstation während des laufenden Zyklus zugeordnet ist, in einem Speicher einer elektronischen Steuereinheit (50) gespeichert wird, wobei das Verfahren einen dritten Schritt (E3) des Berechnens eines Mittelwerts (βₐᵥ) der während eines bestimmten Zeitraums gespeicherten Steigungen (β₁) umfasst.

6. Verfahren nach einem der Ansprüche 2 bis 5, **dadurch gekennzeichnet, dass**, wenn das über einen Zyklus berechnete Kriterium repräsentativ für einen Druckabfall ist, der geringer als ein bestimmter erster Schwellenwert (S1) ist, der bei diesem Zyklus geformte Hohlkörper (12) als Ausschuss ausgeworfen wird.

7. Verfahren nach Anspruch 5, **dadurch gekennzeichnet, dass**, wenn der während des dritten Schritts (E3) des Berechnens eines Mittelwerts (βₐᵥ) berechnete Mittelwert (βₐᵥ) kleiner als ein bestimmter zweiter Schwellenwert (S2) ist, ein Signal, das einen Wartungsbedarf der zugeordneten Formungsstation (10) angibt, von der elektronischen Steuereinheit (50) gesendet wird.

8. Verfahren nach dem vorhergehenden Anspruch, **dadurch gekennzeichnet, dass** die der Formungsstation (10) zugeordneten Mittelwerte (βₐᵥ) in einem Speicher der elektronischen Steuereinheit (50) gespeichert werden, wobei das Verfahren einen zusätzlichen vierten Schritt (E4) des Vorhersagens umfasst, bei dem ein für die Steigung (β₂) der Mittelwerte (βₐᵥ) in Abhängigkeit von der Zeit repräsentatives Kriterium bei jedem Zyklus berechnet wird, wobei die elektronische Steuereinheit (50) dann die Steigung in Abhängigkeit von einer Steigung (β₂) der Mittelwerte (βₐᵥ) und eine Zykluszahl berechnet, die verbleibt, bevor der Mittelwert (βₐᵥ) geringer als der zweite Schwellenwert (S2) wird.

9. Verfahren nach einem der Ansprüche 2 bis 8, **dadurch gekennzeichnet, dass** es auf jede Formungsstation (10) einer Formungseinheit (54), die eine Mehrzahl von Formungsstationen (10) umfasst, angewandt wird, wobei das für den Druckabfall repräsentative Kriterium, das bei dem zweiten Schritt (E2) des Berechnung eines für die Druckabfallgeschwindigkeit repräsentativen Kriteriums berechnet wird, bei jedem Zyklus in Entsprechung zu einer Kennung der zugeordneten Formungsstation (10) gespeichert wird, um eine individuelle Überwachung jeder Formungsstation (10) zu ermöglichen.

10. Verfahren nach dem vorhergehenden Anspruch in Kombination mit Anspruch 5, **dadurch gekennzeichnet, dass** der Mittelwert (βₐᵥ), der bei dem dritten Schritt (E3) des Berechnens eines Mittelwerts (βₐᵥ) berechnet wird, in einem Speicher der elektronischen Steuereinheit (50) in Entsprechung zu der Kennung der zugeordneten Formungsstation (10) gespeichert wird.

11. Verfahren nach einem der vorhergehenden Ansprüche, **dadurch gekennzeichnet, dass** bei dem ersten Schritt (E1) die erste Messung der Reihe nach einer bestimmten Verzögerung (d1), beispielsweise von 40 ms, ab dem Senden eines Schließsignals des Blasventils (26), das das Ende der Phase (P1) des Unterdrucksetzens markiert, erfolgt.

12. Verfahren nach einem der vorhergehenden Ansprüche, **dadurch gekennzeichnet, dass** bei dem ersten Schritt (E1) des Bestimmens des Verlaufs des Formungsfluiddrucks die Messungen der Reihe mit einer Frequenz in der Größenordnung einer Tausendstelsekunde ausgeführt werden.

13. Verfahren nach einem der vorhergehenden Ansprüche, **dadurch gekennzeichnet, dass** die Dauer der Phase (P2) des passiven Haltens mindestens 40 Millisekunden beträgt.

14. Verfahren nach einem der vorhergehenden Ansprüche, **dadurch gekennzeichnet, dass** der erste Schritt (E1) des Bestimmens des Verlaufs des Formungsfluiddrucks des Verfahrens zur Diagnose endet, wenn ein Öffnungssignal eines Ventils (32, 64), das den Beginn der Druckentlastung des Hohlkörpers (12) ermöglicht, von der elektronischen Steuereinheit (50) gesendet wird.

15. Verfahren nach einem der vorhergehenden Ansprüche, **dadurch gekennzeichnet, dass** die Druckmessungen des ersten Schritts (E1) des Bestimmens des Verlaufs des Formungsfluiddrucks von einem Drucksensor (48) durchgeführt werden, der an die elektronische Steuereinheit (50) ein für den Formungsfluiddruck in dem Hohlkörper (12) repräsentatives Signal sendet.

16. Verfahren nach dem vorhergehenden Anspruch, **dadurch gekennzeichnet, dass** der Drucksensor (48) in einer Blasdüse (18) der Formungsstation (10) angeordnet ist, die dazu bestimmt ist, bei seiner Formung dicht an den Hohlkörper (12) angeschlossen zu werden.

## Claims

1. Method for diagnosing a forming fluid leak in at least one station (10) for forming hollow bodies (12) made of thermoplastic material during a production cycle sequence, each cycle comprising a first phase (P1) of pressurizing the hollow body (12) by connection to a source (22) of forming fluid compressed to a maximum blowing pressure (Pfmax) via a blowing valve (26), followed by a second phase (P2) of passively maintaining pressurization during which the hollow body (12) is isolated from the forming fluid source (22) by closure of the blowing valve (26), a phase (P3) of depressurizing the hollow body (12) being triggered at the end of the phase (P2) of passively maintaining pressurization, **characterized in that** the diagnostic method comprises a step (E1) of determining the change in the pressure of the forming fluid in the hollow body (12) by carrying out a series of multiple pressure measurements successively during the phase (P2) of passively maintaining pressurization.

2. Method according to the preceding claim, **characterized in that** the step (E1) of determining the change in the forming fluid pressure is followed by a step (E2) of calculating a criterion representative of the rate of pressure drop in the hollow body (12) during the passive maintenance phase (P2) on the basis of measurements taken during the first step (E1) of determining the change in the forming fluid pressure.

3. Method according to the preceding claim, **characterized in that** the second step (E2) of calculating a criterion representative of the rate of pressure drop consists in calculating the slope (β₁) of a straight line (52) defined by fitting measurements of the forming fluid pressure as a function of time.

4. Method according to the preceding claim, **characterized in that** the slope (β₁) of the straight line (52) is obtained by a linear regression method, such as the least squares method.

5. Method according to any one of Claims 2 to 4, **characterized in that** the value of the slope (β₁) associated with said forming station during the current cycle is recorded in a memory of an electronic control unit (50), the method comprising a third step (E3) of calculating an average (βₐᵥ) of the slopes (β₁) recorded during a determined period.

6. Method according to any one of Claims 2 to 5, **characterized in that**, when the criterion calculated in a cycle is representative of a pressure drop below a determined first threshold (S1), the hollow body (12) formed during this cycle is ejected as scrap.

7. Method according to Claim 5, **characterized in that**, when the average (βₐᵥ) calculated during the third step (E3) of calculating an average (βₐᵥ) is lower than a determined second threshold (S2), a signal indicating a need for maintenance of the associated forming station (10) is emitted by the electronic control unit (50).

8. Method according to the preceding claim, **characterized in that** the averages (βₐᵥ) associated with said forming station (10) are recorded in a memory of the electronic control unit (50), the method comprising an additional fourth prediction step (E4) in which a criterion representative of the slope (β₂) of the averages (βₐᵥ) as a function of time is calculated in each cycle, the electronic unit (50) then calculating, the slope as a function of a slope (β₂) of the averages (βₐᵥ), and a number of cycles remaining before the average (βₐᵥ) becomes lower than said second threshold (S2).

9. Method according to any one of Claims 2 to 8, **characterized in that** it is applied to each forming station (10) of a forming unit (54) comprising a plurality of forming stations (10), the criterion representative of the pressure drop calculated during the second step (E2) of calculating a criterion representative of the rate of pressure drop being stored in each cycle in a manner matched to an identifier of the associated forming station (10) in order to allow individual monitoring of each forming station (10).

10. Method according to the preceding claim, considered in combination with Claim 5, **characterized in that** the average (βₐᵥ) calculated during the third step (E3) of calculating an average (βₐᵥ) is recorded in a memory of the electronic control unit (50) in a manner matched to the identifier of the associated forming station (10).

11. Method according to any one of the preceding claims, **characterized in that**, during the first step (E1), the first measurement in the series is effected after a determined delay (d1), for example of 40 ms, from the emission of a signal for closing the blowing valve (26), marking the end of the pressurization phase (P1).

12. Method according to any one of the preceding claims, **characterized in that**, during the first step (E1) of determining the change in the forming fluid pressure, the measurements in the series are carried out with a frequency of the order of a thousandth of a second.

13. Method according to any one of the preceding claims, **characterized in that** the duration of the passive maintenance phase (P2) is at least 40 milliseconds.

14. Method according to any one of the preceding claims, **characterized in that** the first step (E1) of determining the change in the forming fluid pressure in the diagnostic method comes to an end when a signal for opening a valve (32, 64) enabling the start of depressurization of the hollow body (12) is emitted by the electronic control unit (50).

15. Method according to any one of the preceding claims, **characterized in that** the pressure measurements in the first step (E1) of determining the change in the forming fluid pressure are effected by a pressure sensor (48) which emits to the electronic control unit (50) a signal representative of the forming fluid pressure in the hollow body (12).

16. Method according to the preceding claim, **characterized in that** the pressure sensor (48) is arranged in a blowing nozzle (18) of the forming station (10), said blowing nozzle being intended to be connected in a fluidtight manner to the hollow body (12) during its forming.
